# FASCICULE DE BREVET EUROPEEN

(11) **EP 0 558 402 B1**
(45) Date de publication et mention de la délivrance du brevet: **29.05.1996**
(21) Numéro de dépôt: 93400463.1
(22) Date de dépôt: 23.02.1993
(51) Int. Cl.: C02F 5/02

(54) **Dispositif de déminéralisation de l'eau**
Vorrichtung zur Wasserdemineralisierung
Water demineralisation device

(30) Priorité: 24.02.1992 FR 9202107
(43) Date de publication de la demande: 01.09.1993
(73) Titulaire: C O G I A Société Anonyme, F-91893 Orsay (FR)
(72) Inventeur: Carron, Didier, F-94100 Saint-Maur des Fosses (FR); Deblay, Philippe, F-92290 Catenay-Malabry (FR); Desage, Robert, F-78480 Verneuil-sur-Seine (FR)
(74) Mandataire: Bruder, Michel

(56) Documents cités:
- EP-A- 0 171 357
- EP-A- 0 312 079
- DE-C- 363 253
- PATENT ABSTRACTS OF JAPAN vol. 14, no. 350 (C-744)(4293) 27 Juillet 1990
- PATENT ABSTRACTS OF JAPAN vol. 11, no. 369 (C-461)(2816) 2 Décembre 1987

## Description

La présente invention concerne un dispositif de déminéralisation de l'eau, notamment afin de réduire sa dureté.

La dureté de l'eau, représentée par son titre hydrotimétrique, ou TH, qui s'exprime en degrés F (°F), mesure la concentration en différents sels de calcium et de magnésium. On connaît, notamment par la publication "Mémento technique de l'eau", neuvième édition, 1989, page 485 Editions Degrémont, la liste exhaustive des sels qui déterminent la dureté de l'eau. Ces sels ont pour caractéristique principale de coprécipiter sous l'action d'une élévation de température, notamment au delà d'environ 60°C, et de former des dépôts connus sous le nom général de tartre. Le traitement de l'eau, afin d'en diminuer la dureté, relève donc souvent de la lutte contre l'entartrage, bien que d'autres buts puissent être poursuivis, tels que par exemple la déminéralisation de l'eau pour des applications de laboratoire.

De nombreux dispositifs de déminéralisation partielle ou totale de l'eau, afin notamment d'en réduire la dureté, sont actuellement connus. Parmi les dispositifs les plus employés, on peut distinguer ceux utilisant des résines échangeuses d'ions et ceux agissant par précipitation, soit par ajout d'un agent précipitant, soit par élévation de la température.

On connaît également des dispositifs de prévention de l'entartrage dans lesquels on crée un champ magnétique qui empêche la formation de précipités. Cependant ces dispositifs ne permettent pas de diminuer la quantité des minéraux contenus dans l'eau, et donc d'en abaisser la dureté.

Dans les dispositifs utilisant des résines échangeuses d'ions on fait passer l'eau au travers d'une résine granulaire retenant les sels par échange ionique, et on récupère l'eau en sortie. Ces dispositifs sont d'une remarquable efficacité, bien que celle-ci décroisse rapidement au fur et à mesure de la saturation en sels de la résine. Certaines résines peuvent être régénérées, de façon à prolonger sensiblement leur durée de vie. Les résines utilisées présentent cependant les inconvénients, d'une part, d'être coûteuses et, d'autre part, de posséder une courte durée de vie, sauf en cas de régénération, cette dernière opération étant, de plus, longue et fastidieuse.

Dans les dispositifs agissant par précipitation, par ajout d'un agent précipitant, on provoque une précipitation sélective de sels, puis on élimine les précipités formés. Relativement simples et peu coûteux, ces dispositifs présentent cependant quelques inconvénients. Ainsi, l'introduction d'un agent précipitant nécessite de réaliser un dosage très précis des sels à précipiter, sous peine soit d'en introduire trop peu pour précipiter la totalité des sels, soit, au contraire, d'en introduire en excès ce qui imposerait ensuite de devoir éliminer cet excès d'agent précipitant. D'autre part, l'agent précipitant n'agit pas sur la totalité des sels et certains de ceux-ci, qui influent cependant sur la dureté de l'eau, restent généralement présents dans l'eau après son traitement. De plus, le retrait du précipité formé par l'agent précipitant contraint à mettre en oeuvre des dispositifs assez complexes nécessitant un entretien fréquent.

Dans les dispositifs agissant par précipitation par élévation de température de l'eau à déminéraliser on fait passer celle-ci sur une surface chaude, ce qui provoque, sur cette surface, une précipitation de nombreux sels. La prévention de dépôts de tartre dans les chaudières industrielles est ainsi souvent réalisée de cette façon.

Ces dispositifs, de mise en oeuvre relativement simple, souffrent cependant d'une fiabilité assez aléatoire et d'une efficacité assez restreinte. En effet, les précipités, qui s'accumulent sur la surface chaude forment, en général, des dépôts quasi imperméables très denses et très durs, qui réduisent rapidement l'efficacité de la surface de transfert thermique de la surface chaude. De plus, le chauffage homogène de l'eau est difficilement réalisable, puisque la couche supérieure de l'eau n'est pas en contact avec la surface chaude. Il en résulte, soit qu'une partie seulement de l'eau est déminéralisée, soit que la précipitation est étalée spatialement, ce qui a pour conséquence de créer des dépôts envahissants et mal localisés.

On a proposé d'améliorer l'efficacité des dispositifs de précipitation de sels par effet thermique en augmentant l'aire de la surface chaude avec laquelle l'eau à traiter vient en contact. Ainsi, dans le brevet Hulsmeyer DE-C-363 253 l'eau à traiter est introduite à la partie supérieure d'une enceinte cylindrique fermée d'axe vertical contenant un matériau poreux de forme tronconique, qui s'étend sur la plus grande partie de la hauteur de l'enceinte, et qui est constitué de tuf ou de pierre synthétique, ce matériau étant chauffé par injection, dans l'enceinte, de vapeur d'eau sous pression. L'eau à traiter s'écoule à la fois sur la surface externe du matériau poreux, entre les interstices séparant les différents blocs, et au travers du volume du matériau poreux lui-même avec un débit moindre. Un tel dispositif présente de notables inconvénients.

De première part, la qualité de la déminéralisation obtenue est irrégulière puisque, à l'évidence elle dépend du débit de l'eau amenée à la surface du matériau poreux. En effet, plus ce débit est élevé et plus la quantité d'eau qui s'écoule sur l'extérieur du matériau poreux est importante, et plus la proportion d'eau qui ne viendra pas (ou peu) en contact avec le matériau poreux est élevée.

De seconde part, un tel dispositif est particulièrement encombrant, ce qui en exclut l'utilisation pour de nombreuses applications et, notamment, pour les petits appareils utilitaires tels que les fers à repasser, les décolleurs de papier peint, etc....

Il est également connu du brevet EP-B-0 312 079 un dispositif permettant l'élimination du tartre par précipitation, ledit dispositif comprenant une résistance chauffante enveloppant un réservoir rempli d'un matériau granulaire tel que du sable ou du charbon.

De façon globale, les dispositifs de déminéralisation de la technique antérieure faisant appel à des matériaux poreux chauffés, traversés par l'eau à déminéraliser présentent deux inconvénients majeurs qui se manifestent et s'amplifient au fur et à mesure de l'utilisation, et qui sont dus à une obturation progressive des pores en raison de la formation des dépôts quasi imperméables précédemment mentionnés, à savoir de première part une limitation importante du débit et, d'autre part, une diminution de la surface de contact de l'eau avec le matériau poreux, qui se traduit par une baisse de la qualité de la déminéralisation au fur et à mesure de l'utilisation.

La présente invention a pour but de proposer un dispositif de déminéralisation, au moins partielle, de l'eau, notamment afin de réduire sa dureté, ce dispositif présentant la particularité surprenante de fournir une eau déminéralisée dont la qualité, non seulement ne diminue pas au fur et à mesure de son utilisation mais, au contraire, augmente au cours de celle-ci, sans que le débit de l'eau déminéralisée fournie diminue de façon notable, tout au moins pendant un temps d'utilisation important. Par ailleurs, l'invention autorise la réalisation d'un dispositif déminéralisateur suffisamment compact pour qu'il puisse être utilisé dans des appareils de faible volume, tels que par exemple les fers à repasser ou les décolleurs de papier peint.

La présente invention a ainsi pour objet un dispositif de déminéralisation de l'eau du type comportant un matériau poreux traversé par l'eau à déminéraliser, caractérisé en ce que le matériau poreux est constitué d'un corps microporeux fibreux, dont les espaces interfibres sont en communication les uns avec les autres, la porosité du corps microporeux fibreux étant au moins égale à 50%, ce dispositif, comprenant
- des moyens d'alimentation en eau à déminéraliser d'une face amont du corps microporeux fibreux pour faire percoler l'eau à déminéraliser, exclusivement à travers le corps microporeux fibreux, de la face amont de celui-ci vers une face aval,
- des moyens de chauffage du corps microporeux fibreux aptes à maintenir celui-ci, au moins pendant la durée de la percolation, à une température d'au moins 60°C, de manière à provoquer une montée rapide en température de l'eau à déminéraliser venant en contact avec le corps microporeux fibreux pendant la percolation,
- des moyens aptes à recueillir l'eau déminéralisée après sa percolation.

Dans le présent texte le terme de corps microporeux fibreux désignera tout corps poreux constitué de fibres entrelacées ou non formant entre elles des interstices ou pores qui ne sont pas visibles à l'oeil nu mais sont détectables au microscope optique, en communication les uns avec les autres de façon qu'ils soient perméables à l'eau, la porosité globale du corps microporeux fibreux, c'est-à-dire le rapport du volume occupé par les pores accessible par les molécules d'eau, sur le volume total du corps poreux étant supérieur à 50%.

Dans un mode de mise en oeuvre intéressant de l'invention, le maintien en température du corps microporeux fibreux est assuré au moyen de vapeur d'eau.

Dans une variante du présent mode de mise en oeuvre de l'invention, le flux de vapeur d'eau traverse le corps microporeux fibreux à contre-courant du sens de percolation de l'eau au sein de celui-ci, ce qui permet un transfert thermique encore plus facile entre la vapeur et ledit corps microporeux fibreux ainsi qu'une excellente homogénéité thermique de ce dernier, améliorant la rétention des sels au sein de celui-ci.

Dans un mode de mise en oeuvre intéressant de l'invention le chauffage du corps microporeux fibreux est réalisé au moyen d'un flux de vapeur que l'on injecte au travers de celui-ci.

Les essais réalisés par la demanderesse lui ont permis d'établir que le fait d'amener de l'eau à déminéraliser à la surface d'un corps microporeux fibreux, de chauffer ce corps microporeux fibreux à une température d'au moins 60°C, et de faire percoler ladite eau à déminéraliser à travers celui-ci, permettait de réaliser une rétention particulièrement efficace des sels contenus dans l'eau à déminéraliser.

D'une part, la demanderesse a établi que la diminution du degré hydrotimétrique de l'eau était considérablement plus forte lorsque, dans des conditions identiques par ailleurs, l'eau à déminéraliser était amenée en surface d'un corps microporeux fibreux et perméable, et qu'elle percolait ensuite à travers ledit corps, que lorsqu'elle était amenée en surface d'un corps perméable mais non microporeux. Cette amélioration est attribuée par la demanderesse à la très fine dispersion de l'eau qui se produit en surface du corps microporeux fibreux, ou plus précisément dans sa couche superficielle, ainsi que dans son volume qui, d'une part, induit une surface d'échange considérable entre les micro-gouttelettes d'eau ainsi créées et les pores du corps microporeux fibreux et, d'autre part, offre une grande surface pour la fixation des précipités. En effet, à son arrivée en surface du corps microporeux fibreux, l'eau a tendance à imprégner la couche superficielle du matériau, créant ainsi un véritable espace de rétention, et notamment de précipitation, à la place d'une simple surface.

D'autre part, la demanderesse a établi que la présente invention permettait de remédier à l'un des inconvénients majeurs des dispositifs réalisant la déminéralisation de l'eau par passage de celle-ci sur un corps chauffé, à savoir la formation, sur ce corps, de dépôts imperméables, durs, et isolants dont la présence perturbe le bon fonctionnement du déminéralisateur et la qualité de l'eau déminéralisée obtenue. En effet, à la différence des dépôts obtenus dans les dispositifs de l'art antérieur, les dépôts formés en surface d'un corps microporeux fibreux et perméables sont pulvérulents, friables et eux-même poreux et perméables, de sorte que se produit alors un phénomène très remarquable, à savoir la préservation de l'efficacité de la percolation de l'eau à déminéraliser au cours du traitement, voire même son amélioration.

En effet, d'une part, le corps microporeux fibreux est, lors d'une mise en oeuvre répétée de l'invention, progressivement recouvert d'un second corps microporeux, d'épaisseur croissante, composé des dépôts formés depuis la mise en service du dispositif. La surface supérieure de ce second corps microporeux devient ainsi le siège de la formation de dépôts dont la porosité s'ajoute à celle du corps microporeux fibreux initial.

Par ailleurs, ainsi qu'il est connu de l'état antérieur de la technique, les dépôts déjà formés constituent un germe très favorable à la constitution de nouveaux dépôts, la rétention des sels en surface du corps microporeux s'effectuant notamment par précipitation. Ce second corps microporeux est donc idéalement adapté pour devenir le support de nouveaux dépôts par précipitation. Dans ces conditions, non seulement les dépôts formés ne présentent pas une gêne au bon fonctionnement du dispositif de déminéralisation, comme cela est admis par l'enseignement de l'art antérieur, mais au contraire ces dépôts améliorent la qualité de la déminéralisation produite.

On décrira ci-après, à titre d'exemple non limitatif, des formes d'exécution de la présente invention, en référence au dessin annexé sur lequel :
La figure 1 est une vue en coupe verticale schématique d'un dispositif de déminéralisation suivant l'invention.
La figure 2 est une vue de dessus du dispositif de déminéralisation représenté sur la figure 1, la paroi supérieure de celui-ci ayant été ôtée.
La figure 3 est une vue en coupe verticale partielle et schématique d'une variante d'un dispositif de déminéralisation suivant l'invention.
La figure 4 est une vue schématique en coupe verticale d'une variante de mise en oeuvre de l'invention.
La figure 5 est une vue schématique en perspective d'une variante de mise en oeuvre du dispositif suivant l'invention.
La figure 6 est un graphique représentant la variation du débit de l'eau à déminéraliser au travers d'un corps microporeux en fonction de l'épaisseur de celui-ci.

On trouvera, ci-après, des résultats obtenus en mettant en oeuvre le dispositif selon l'invention pour déminéraliser partiellement une eau du robinet, modérément calcaire, de dureté initiale 24 TH.

Les quatre séries d'expériences suivantes ont été effectuées à partir de corps microporeux fibreux et perméables d'une surface supérieure d'environ 50 cm2, d'une épaisseur de 2cm, suspendus à mi-hauteur dans une enceinte close d'environ 15 cm de long, 4 cm de large et 8 cm de haut, ces corps microporeux fibreux étant portés, par des moyens de chauffage appropriés, à une température de l'ordre de 90°C. Ces corps microporeux fibreux étaient arrosés par de l'eau du robinet à une température d'environ 15°C au moyen d'une rampe, constituée d'un tube cylindrique percé de plusieurs trous, permettant une bonne répartition de l'arrosage.

Dans une première série d'essais, consignée dans le tableau I ci-après, on a mesuré pour des corps microporeux fibreux de natures différentes la variation du titre hydrotimétrique de l'eau après que celle-ci ait traversé, suivant l'invention, un corps microporeux fibreux déterminé d'épaisseurs respectivement différentes. Le débit d'arrivée de l'eau était d'environ 35 cm³/min, et le débit de l'eau déminéralisée, c'est-à-dire le débit de l'eau en aval du corps microporeux fibreux également de 35cm³/min.

Au cours de cet essai le corps microporeux fibreux était constitué de fibres enchevêtrées de cinq micromètres de diamètre successivement de silice, de laine de roche de silicate de calcium, et de silicate d'alumine, la porosité de chacun de ces corps poreux étant de l'ordre de 80%.

**TABLEAU I**

| | Matériau utilisé | Epaisseur (mm) | Porosité globale (%) | TH final (°F) |
|---|---|---|---|---|
| TECHNIQUE ANTERIEURE | | | | |
| Ecoulement en surface | Cuivre | Ecoulement en Surface | | 18 |
| | Polypropylène | | | 18 |

| INVENTION | | | | |
|---|---|---|---|---|
| Percolation au travers d'un corps poreux et perméable. | Silice allégée | 30 | 75 | 16 |
| | Laine de roche | 20 | 98 | 16 |
| | Silicate de calcium | 10 | 80 | 12 |
| | Silicate d'alumine | 5 | 80 | 12 |
| | Silicate d'alumine | 10 | 80 | 12 |
| | Silicate d'alumine | 20 | 80 | 12 |

Ce tableau met en évidence l'intérêt d'utiliser un corps microporeux fibreux dont la porosité et la perméabilité soient suffisantes pour effectuer une déminéralisation, conduisant à une diminution appréciable de la dureté. On notera que, lors des essais réalisés avec le cuivre et le polypropylène, l'eau coulait le long de la surface de ces matériaux, puis tombait le long de leurs bords, d'une façon similaire aux dispositifs de traitement mis en oeuvre suivant l'état antérieur de la technique.

On peut noter que la qualité de la déminéralisation obtenue varie suivant la nature du corps microporeux fibreux utilisé. En particulier, les matériaux à base de silicates permettent un abaissement plus important du degré hydrotimétrique que les autres matériaux.

On peut noter également, ainsi que montré par les trois derniers essais du tableau I, que l'épaisseur du corps microporeux fibreux n'a pas d'effet sensible sur la qualité du résultat, la précipitation et la rétention des sels ayant lieu en surface de celui-ci et dans les premiers millimètres à proximité de sa surface amont. Toutefois une épaisseur de l'ordre d'un à deux centimètres est souhaitable afin d'obtenir une bonne résistance mécanique du corps microporeux fibreux. La présente invention permet donc de diminuer, de façon notable, l'encombrement et donc également le poids des dispositifs de déminéralisation de la technique antérieure, ce qui a pour conséquence d'étendre le domaine d'utilisation de ces appareils.

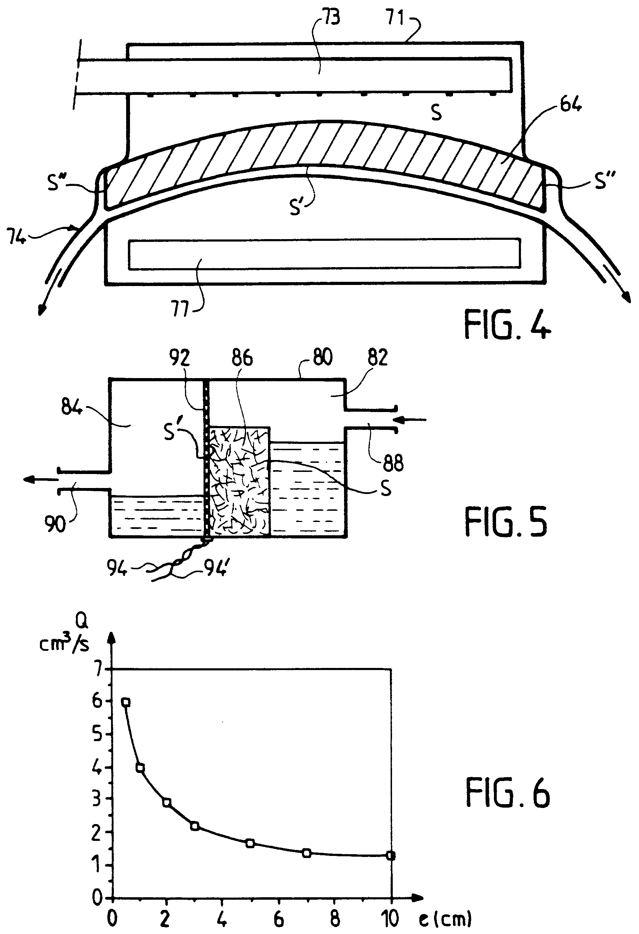

La présente invention, en permettant de constituer des déminéralisateurs à corps microporeux fibreux de faible épaisseur, permet également d'obtenir des débits d'eau déminéralisée, plus importants. En effet, comme représenté sur la figure 6, on constate que, dans le cas par exemple où le corps microporeux est constitué de fibres enchevêtrées de laine de roche de cinq micromètres d'épaisseur, la porosité de ce corps microporeux fibreux étant d'environ 98%, le débit de l'eau au travers de celui-ci passe de 6cm³/s lorsque le corps microporeux fibreux a une épaisseur de 0,5 cm, à 1,5 cm³/s lorsque celui-ci à une épaisseur de 10cm.

Des mesures complémentaires ont établi qu'une porosité minimale de 50% était nécessaire pour réaliser une bonne imprégnation de la couche superficielle du corps microporeux fibreux par l'eau à déminéraliser ainsi que pour assurer une bonne percolation. Des résultats très satisfaisants sont obtenus à partir d'une porosité d'environ 70%. Les matériaux utilisés pour constituer le corps microporeux fibreux présentent, à de très rares exceptions près, une excellente perméabilité. Cette perméabilité est nécessaire de façon que l'eau amenée en surface du corps microporeux fibreux puisse, dans un premier temps, imprégner sa couche superficielle puis, dans un deuxième temps, percoler à travers celui-ci.

Dans une seconde série d'essais, on a alimenté un corps microporeux fibreux, constitué d'un bloc de silicate d'alumine d'épaisseur 2cm et de porosité 80%, avec de l'eau à déminéraliser à une température d'environ 15°C dont le TH est égal à environ 24, et l'on a fait varier la température du corps microporeux. Les mesures du titre hydrotimétrique de l'eau déminéralisée obtenue ont été consignées dans le tableau suivant :

**TABLEAU II**

| Température du matériau microporeux fibreux (°C) | Titre hydrotimétrique de l'eau obtenue (°F) |
|---|---|
| 50 | 24 |
| 65 | 20 |
| 90 | 12 |
| 98 | 12 |

Les résultats de cette seconde série d'essais montrent qu'aucune déminéralisation sensible n'intervient tant que le corps microporeux n'est pas porté à une température d'environ au moins 60°C. Il est à noter que cette température s'entend en fonctionnement, c'est-à-dire pendant l'arrosage de la surface du corps microporeux fibreux par l'eau à déminéraliser.

Ces essais mettent bien en lumière la différence entre les dispositifs utilisant des résines échangeuses d'ions et le dispositif suivant l'invention puisque, à froid, le corps microporeux fibreux utilisé ne retient aucun des sels de calcium et de magnésium contenus dans l'eau à déminéraliser, tant sur sa surface qu'en son volume, alors que les résines échangeuses d'ions retiennent au moins une partie de ces sels à température ambiante.

Dans une troisième série d'essais dans laquelle le corps microporeux fibreux était un bloc de fibres de silicate d'alumine d'une épaisseur de 2 cm, maintenu à une température voisine de 90°C, on a fait varier la température initiale de l'eau à traiter et l'on a consigné dans le tableau III ci-après les variations correspondantes du titre hydrotimétrique de l'eau obtenue.

**TABLEAU III**

| Température initiale de l'eau à déminéraliser (°C) | Titre hydrotimétrique de l'eau obtenue (°F) |
|---|---|
| 15 | 12 |
| 40 | 16 |
| 65 | 20 |

Ces résultats montrent qu'un accroissement de la différence de température entre l'eau à déminéraliser et le corps microporeux fibreux dans lequel elle percole lors de la déminéralisation, permet d'améliorer très nettement l'efficacité du traitement. Il est probable qu'une montée rapide en température de l'eau, ou choc thermique, favorise une cristallisation des sels sur les sites d'accrochage à la surface et également dans le volume du corps microporeux fibreux. A l'opposé, la percolation à travers le corps microporeux fibreux d'une eau préalablement chauffée ne mène qu'à une rétention des sels préalablement précipités, cette rétention étant vraisemblablement majoritairement surfacique.

Dans une quatrième série d'essais, dans laquelle le corps microporeux fibreux était un bloc de fibre de silicate de calcium d'épaisseur 1 cm, on a fait varier la répartition de l'eau amenée en surface dudit corps microporeux, le débit de l'eau à déminéraliser restant constant et égal à 35 cm³/min, son titre hydrotimétrique étant de 24, et la température dudit corps microporeux fibreux étant maintenue à environ 90°C. On a également incliné la surface du corps microporeux fibreux de façon que, l'eau ayant tendance à couler le long de la surface, la surface d'imprégnation soit doublée. Les résultats obtenus ont été consignés dans te tableau IV ci-après :

**TABLEAU IV**

| Nombre d'orifices d'arrivée d'eau | Surface d'imprégnation (cm²) | TH Final |
|---|---|---|
| 6 | 6 | 12 |
| 10 | 10 | 11 |
| 10 et surface inclinée | 20 | 10 |

Les résultats de cette quatrième série d'essais montrent qu'une bonne répartition de l'eau distribuée en surface du corps microporeux fibreux permet d'améliorer le rendement de la déminéralisation, en raison probablement du fait de l'accroissement corrélatif de la surface de contact entre l'eau et le corps microporeux fibreux.

Par ailleurs, le fait que le corps microporeux fibreux recevant l'eau à déminéraliser soit préalablement peu imprégné améliore la qualité de la déminéralisation.

L'essai complémentaire suivant met en évidence le rôle du degré d'imprégnation du corps microporeux fibreux. En utilisant le même dispositif que précédemment, le corps microporeux fibreux étant constitué de fibres de silice allégée, la demanderesse a mesuré la variation du titre hydrotimétrique dans deux configurations le débit d'arrivée de l'eau à déminéraliser étant environ 35 cm³/min et son titre hydrotimétrique étant de 24.

Dans une première configuration, le corps microporeux fibreux était disposé au-dessus de l'eau déminéralisée recueillie au fond d'une enceinte, sans qu'il se trouve en contact avec cette eau, si bien que son imprégnation était de l'ordre de 90%.

Dans une seconde configuration, le tiers inférieur du corps microporeux fibreux était immergé dans l'eau déminéralisée recueillie au fond de l'enceinte, si bien que le corps microporeux fibreux était saturé en eau, (imprégnation égale à 100%) celle-ci montant dans le corps microporeux fibreux sous l'effet des forces de capillarité.

**TABLEAU V**

| Situation du tiers inférieur du corps microporeux fibreux | Titre hydrométrique de l'eau obtenue |
|---|---|
| Baigne dans l'eau déminéralisée | 20 |
| Hors de l'eau déminéralisée | 16 |

Ces résultats confirment donc bien le rôle joué par l'imprégnation du corps microporeux fibreux et l'amélioration de la déminéralisation lorsque celle-ci est relativement faible.

Ainsi qu'il ressort des différents essais décrits ci-dessus, le dispositif selon l'invention est d'une mise en oeuvre particulièrement simple et économique, puisqu'il ne nécessite aucun appareillage sophistiqué et que le matériel nécessaire peut être réalisé simplement dans des matériaux courants. De plus, il ne nécessite aucune autre dépense d'énergie que celle correspondant au chauffage du corps microporeux fibreux, puisque la percolation peut s'effectuer sous l'effet de la simple gravité. Enfin, lorsque l'eau est préalablement chauffée pour d'autres raisons, par exemple dans le cas d'un chauffe-eau ou d'une chaudière, le dispositif en lui-même peut ne consommer aucune énergie supplémentaire, puisque la source d'énergie utilisée pour le chauffage de l'eau peut être également utilisée pour assurer le chauffage du corps microporeux fibreux.

Le dispositif selon l'invention est, de plus, d'une excellente fiabilité. En effet, comme noté précédemment, l'efficacité de celui-ci a tendance à s'accroître en cours de fonctionnement et aucun entretien n'est nécessaire. La limitation à l'usage provient bien évidemment du colmatage progressif du corps microporeux fibreux, bien que ce dernier demeure poreux et perméable beaucoup longtemps que ceux des dispositifs de l'état antérieur de la technique. Le simple remplacement d'un corps microporeux fibreux recouvert de dépôts de sels par un corps microporeux fibreux neuf permet de remettre en état de fonctionnement le dispositif. Il s'agit là du seul entretien nécessité par les dispositifs selon l'invention. On notera que cette remise en état est d'un coût particulièrement réduit, par opposition, aux dispositifs de l'état antérieur de la technique.

Les moyens de chauffage du corps microporeux fibreux peuvent être quelconques, dans la mesure où ils permettent de chauffer à la fois la surface et le volume du corps microporeux fibreux sans élever la température de l'eau à déminéraliser avant que celle-ci n'entre en contact avec le corps microporeux fibreux.

Le chauffage du corps microporeux fibreux peut être ainsi réalisé par exemple, par passage du courant électrique dans l'eau contenue dans le corps microporeux fibreux, le courant électrique étant amené dans ce dernier au moyen d'électrodes plaquées sur deux de ses faces opposées ou insérées dans son volume. On peut également chauffer le corps microporeux fibreux à l'aide d'un magnétron émettant des micro-ondes. Le chauffage peut être réalisé également au moyen d'une ou de plusieurs résistances électriques pouvant, par exemple, se présenter sous la forme d'un grillage résistif inséré dans le corps microporeux fibreux. On peut également chauffer ce dernier en le disposant dans une enceinte remplie de vapeur d'eau. Cette dernière forme de mise en oeuvre de l'invention est particulièrement intéressante car, d'une part, elle permet un chauffage homogène du corps microporeux fibreux et, d'autre part, elle est très facile à réaliser, notamment lorsque le dispositif selon l'invention équipe un appareil de chauffage, et encore plus favorablement une chaudière. Dans ce dernier cas, le corps microporeux fibreux peut être placé dans l'enceinte même de vaporisation de la chaudière, l'eau à déminéraliser étant, par exemple, stockée à température ambiante à l'extérieur de cette enceinte et introduite dans celle-ci au moyen d'un distributeur.

Dans une mise en oeuvre particulière, le corps microporeux fibreux est traversé par un flux de vapeur à contre-courant du sens de percolation de l'eau au sein du corps microporeux fibreux, ce qui facilite les échanges thermiques au sein de ce dernier.

Dans le dispositif selon l'invention, ta nature du corps microporeux fibreux peut être pratiquement quelconque.

Le corps microporeux fibreux peut ainsi être constitué d'un matériau naturel ou de synthèse, bon ou mauvais conducteur thermique. Il peut être constitué par exemple de fibres enchevêtrées, de silicate d'alumine de 2,5 micromètres de diamètre ou de silice de 5 ou 9 micromètres de diamètres, la porosité étant de l'ordre de 75 à 98%.

Bien qu'il soit possible d'utiliser tout corps microporeux fibreux, il est cependant préférable d'utiliser des corps microporeux fibreux qui présentent une large capacité d'association chimique avec les sels de calcium et de magnésium, tels que par exemple les matériaux à base de silicate d'alumine ou de silicate de calcium déjà cités.

L'épaisseur du corps microporeux fibreux sera de préférence faible en comparaison de ses autres dimensions. Cependant, celle-ci pourrait difficilement être inférieure à environ 5 millimètres car, outre les éventuelles faiblesses mécaniques, le temps de transit de l'eau dans la couche superficielle du corps microporeux fibreux, puis dans son volume, peut alors être très réduit et conduire à une rétention, et notamment à une précipitation, incomplète. Néanmoins, dans un tel cas, cette situation est transitoire puisque, du fait de la création de dépôts microporeux en surface du corps microporeux fibreux, l'épaisseur résultante croît en cours d'utilisation et le temps de transit de l'eau s'accroît alors notablement.

Dans le dispositif selon l'invention, le moyen utilisé pour amener l'eau à déminéraliser sur le corps microporeux fibreux peut être quelconque, bien que des systèmes permettant une bonne répartition de l'eau soient nettement préférables. L'eau peut ainsi être amenée, par exemple, tangentiellement au corps microporeux fibreux, son imprégnation dans ce dernier se réalisant progressivement. Préférentiellement, l'eau peut être amenée par arrosage, au moyen par exemple d'une rampe, d'un diffuseur ou même d'un "brumisateur". L'eau peut être amenée latéralement sur l'une des faces verticales du corps poreux, la percolation s'effectuant alors sous l'effet de la différence de hauteur d'eau de part et d'autre du corps poreux. L'eau peut être amenée en flux continu, ou alternativement en flux périodique, cette dernière mise en oeuvre pouvant éventuellement permettre d'éviter une baisse intempestive trop forte de la température du corps microporeux fibreux sous l'effet d'eau à déminéraliser arrivant à sa surface.

Le dispositif selon l'invention peut être notamment placé en amont de nombreux appareils alimentés par l'eau du robinet et qui sont sensibles à l'entartrage, et plus généralement à l'accumulation des sels minéraux. Parmi de tels appareils, on peut citer, à titre d'exemple, les chaudières industrielles, les chauffe-eau, les fers à repasser et les réacteurs chimiques utilisant l'eau courante. Le dispositif selon l'invention peut aussi être utilisé pour le dessalage de l'eau de mer, par exemple en combinaison avec d'autres procédés.

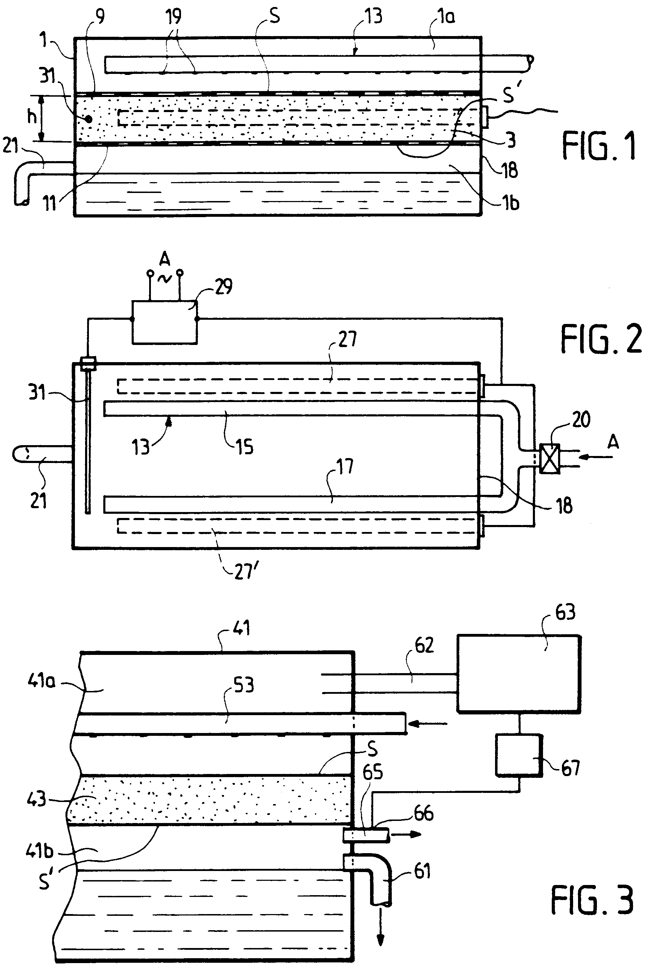

Sur les figures 1 et 2 le dispositif de déminéralisation est essentiellement constitué d'une enceinte étanche 1 de forme parallélépipédique, réalisée en un matériau plastique, tel que du polypropylène, à l'intérieur de laquelle est disposé, sensiblement à mi-hauteur, un bloc 3 d'un corps microporeux fibreux dont la hauteur h est d'environ 2 cm, ce qui représente le tiers environ de la hauteur de l'enceinte 1. Le corps microporeux fibreux 3 divise ainsi l'enceinte 1 en deux chambres, à savoir une chambre supérieure 1a et une chambre inférieure 1b. Le corps microporeux fibreux 3 est inséré entre deux grilles, une grille supérieure 9 et une grille inférieure 11, qui sont fixées, par exemple par soudage, aux parois verticales de l'enceinte 1. Le corps microporeux fibreux 3 est constitué, dans le présent exemple, d'un "matelas" de fibres de silicate d'alumine de diamètre d'environ 2,5 micromètres, tel que celui commercialisé sous la marque "DURABOARD" mais, bien entendu, d'autres corps microporeux fibreux pourraient être également utilisés dans une même configuration. Une rampe d'alimentation en eau à déminéraliser 13 est disposée au-dessus de la surface amont S du corps microporeux 3. Cette rampe 13 est constituée de deux tubes 15,17, par exemple en polypropylène, qui sont parallèles entre eux et à la surface supérieure S du corps microporeux fibreux 3. Les tubes 15,17 traversent l'une des parois verticale 18 de l'enceinte 1, sur laquelle ils sont fixés, et sont réunis, à l'extérieur de l'enceinte 1, à des moyens d'alimentation en eau à déminéraliser, non représentés sur le dessin, par l'intermédiaire d'une électrovanne de commande 20 qui contrôle l'arrivée de l'eau à déminéraliser. Les tubes 15,17 sont percés, à leur partie inférieure, d'une série d'orifices 19 disposés en quinconce, destinés à assurer une distribution régulière et homogène de l'eau à déminéraliser sur la surface amont S du corps microporeux fibreux 3. Bien entendu l'eau à déminéraliser pourrait également provenir d'une alimentation qui ne serait pas sous pression et, dans ce cas, l'alimentation et la régulation en débit de l'eau à déminéraliser seraient réalisées, par exemple, au moyen d'une pompe à débit réglable. Un tuyau d'évacuation 21 de l'eau déminéralisée est raccordé à la chambre inférieure 1b de l'enceinte 1.

Dans le présent mode de mise en oeuvre de l'invention les moyens de chauffage du corps microporeux fibreux 3 sont constitués de deux résistances 27,27' qui sont noyées dans le corps microporeux fibreux 3, et qui traversent la paroi verticale 18 de l'enceinte 1 sur laquelle elles sont fixées. Ces résistances sont alimentées en courant électrique, par l'intermédiaire d'un boîtier de régulation 29, lui-même alimenté en courant électrique par le secteur A. Un capteur de température, constitué par exemple d'un thermocouple 31, est logé à mi-épaisseur de la face centrale du corps microporeux fibreux 3. Le thermocouple 31 est relié au boîtier de régulation 29, de qui il reçoit son alimentation et à qui il envoie les informations nécessaires à une régulation efficace des résistances de chauffage 27 et 27'. Ainsi, lorsque la température relevée par le thermocouple 31 est inférieure à la température de consigne T à laquelle on souhaite porter le corps microporeux fibreux 3, les résistances 27,27' sont mises sous tension ce qui assure un chauffage du corps microporeux fibreux 3 et, notamment, de sa surface supérieure. Ainsi, le système de régulation constitué du thermocouple 31, du boîtier de régulation 29, et des résistances de chauffage 27,27' assure un maintien du corps microporeux fibreux 3 à une température sensiblement constante et égale à la température de consigne T, cette dernière se situant au-dessus de 60°C.

Dans ces conditions le dispositif de déminéralisation suivant l'invention fonctionne de la façon décrite ci-après. Dans un premier temps, une quantité suffisante d'eau à déminéraliser est admise sur la surface amont S du corps microporeux fibreux 3, de façon que l'eau traverse celui-ci par percolation, et commence à s'écouler dans la chambre inférieure 1b de l'enceinte 1. Le boîtier de régulation 29 est alors mis sous tension et assure le chauffage progressif du corps microporeux fibreux 3 jusqu'à la température de consigne T choisie. Lorsque celle-ci est atteinte, et puisque le corps microporeux fibreux 3 est déjà imprégné d'eau, tout envoi d'eau supplémentaire dans celui-ci est immédiatement suivi d'une sortie d'eau déminéralisée, qui s'écoule dans la chambre inférieure 1b de l'enceinte 1.

Bien entendu, le mode de mise en oeuvre décrit ci-dessus, est un exemple non limitatif des différents types de mises en oeuvre possibles de l'invention. Bien évidemment des variantes peuvent être prévues dans le but d'améliorer notamment les performances du dispositif.

Ainsi la percolation, au lieu d'être effectuée à la pression atmosphérique, comme dans l'exemple précédent, peut également être effectuée sous pression, par exemple à la manière des machines à café dite "expresso", à condition que la pression en amont soit supérieure à la pression en aval.

D'autre part, le dispositif suivant l'invention peut également être utilisé en association avec d'autres dispositifs. Il peut être mis en oeuvre soit en amont soit en aval de ceux-ci, de façon à compléter, en fonction des besoins, la déminéralisation réalisée par ces derniers.

On peut également faire appel à d'autres moyens de chauffage que des résistances électriques pour assurer le chauffage du corps microporeux fibreux 3. On peut ainsi, lorsque le dispositif de déminéralisation suivant l'invention est utilisé conjointement avec un appareil produisant une énergie calorifique, tel que par exemple un chauffe-eau ou une chaudière, utiliser la chaleur produite par cet appareil pour assurer le chauffage du corps microporeux fibreux. On peut également utiliser, notamment, un flux de vapeur traversant ce corps microporeux fibreux, par exemple à contre-courant de la direction de percolation de l'eau au sein de celui-ci.

Dans un mode de mise en oeuvre de l'invention, représenté sur la figure 3, le chauffage du corps microporeux fibreux est ainsi assuré par de la vapeur d'eau. Ce dispositif est constitué d'une enceinte parallélépipédique 41 à l'intérieur de laquelle est disposé, sensiblement à mi-hauteur, un corps microporeux fibreux 43, qui sépare l'intérieur de l'enceinte 41 en deux chambres, à savoir une chambre supérieure 41a et une chambre inférieure 41b. La chambre supérieure 41a comprend, comme précédemment, une rampe 53, destinée à assurer l'alimentation de la surface amont S du corps microporeux fibreux 43 en eau à déminéraliser, et la chambre inférieure 41b comprend une canalisation 61 destinée à évacuer l'eau déminéralisée produite par le dispositif.

La chambre supérieure 41a est reliée, par une canalisation 62, à un générateur de vapeur 63, et la chambre inférieure 41b est mise en communication avec l'atmosphère par une canalisation 65 d'évacuation de la vapeur résiduelle. Cette canalisation 65 peut être pourvue d'un capteur 66 apte à agir, par l'intermédiaire d'une interface 67, sur le générateur de vapeur 63 de façon à réguler le débit du flux de vapeur produit par celui-ci au strict minimum pour que la chambre supérieure 41a soit constamment remplie de vapeur. Ainsi, une partie de la vapeur se condense sur le corps microporeux fibreux 43 et assure ainsi son chauffage.

Le dispositif ainsi décrit fonctionne de la façon suivante. On commence par activer le générateur de vapeur 63 jusqu'à ce qu'il ait fourni suffisamment de vapeur d'eau pour remplir la chambre supérieure 41a. On peut alors alimenter en eau le corps microporeux fibreux 43, soit en continu soit par saccades, avec l'eau que l'on souhaite déminéraliser. Celle-ci tombe par simple gravité sur le corps microporeux fibreux 43, à la surface amont S duquel s'effectue une première précipitation de sels, puis elle percole, par simple gravité, dans celle-ci pour finalement tomber dans la chambre inférieure 41b et y être récupérée par la canalisation d'évacuation 61.

Il est possible également de laisser le générateur de vapeur 63 envoyer la vapeur vers l'enceinte de façon continue, ce qui évite de mettre en oeuvre des moyens de régulation de débit de vapeur. On peut également ne déclencher le générateur de vapeur 63 qu'à chaque appel d'eau, si toutefois un tel fonctionnement assure bien une température suffisante du corps microporeux fibreux, c'est-à-dire une température supérieure à 60°C.

Dans une mise en oeuvre particulière, l'arrivée de vapeur peut se faire sous le corps microporeux fibreux 43 tandis que l'évacuation de la vapeur se fait, quant à elle, au-dessus de celui-ci. La vapeur traverse ainsi le corps microporeux fibreux 43 de bas en haut, c'est à dire à contre-courant du sens de percolation de l'eau. Il s'ensuit un transfert thermique encore plus facile entre le corps microporeux fibreux et la vapeur et une excellente homogénéité de la distribution thermique dans le corps microporeux fibreux 43, ce qui améliore la rétention des sels au sein de celui-ci.

Dans un mode de mise en oeuvre particulièrement intéressant, le corps microporeux fibreux est disposé en pente sous la rampe. En effet, dans un tel cas, l'eau arrivant sur la surface du corps microporeux fibreux a tendance à s'écouler sur celui-ci, tout en l'imprégnant. Il s'ensuit que la surface d'imprégnation est plus grande que lorsque le corps microporeux fibreux est horizontal.

Ainsi sur la figure 4, le dispositif de déminéralisation suivant l'invention est constitué d'une enceinte 71 à l'intérieur de laquelle est disposé un corps microporeux fibreux perméable 64 dont la surface supérieure amont S est alimentée en eau à déminéraliser par des moyens d'arrosage 73. Le corps microporeux 64 est de forme incurvée et sa concavité est orientée vers le bas, de façon que l'eau amenée par les moyens d'arrosage 73 puisse ruisseler sur sa surface supérieure S. Dans ce mode de mise en oeuvre de l'invention, des moyens collecteurs 74 sont prévus pour recueillir l'eau en sortie de la face inférieure ou face aval S' du corps microporeux fibreux 64 ainsi que l'eau en sortie des faces latérales S'' de celui-ci.

Des moyens de chauffage 77 sont disposés sous le corps microporeux fibreux 64. Ces moyens de chauffage 77 peuvent être de tout type et peuvent, de façon intéressante, être constitués par les moyens de chauffage propres d'appareils utilisés conjointement au dispositif suivant l'invention, tels que des chauffe-eaux ou des chaudières.

Dans un mode de mise en oeuvre particulièrement simple et peu coûteux du dispositif de déminéralisation suivant l'invention, représenté sur la figure 5, la percolation de l'eau s'effectue dans le sens horizontal. Ce dispositif est constitué d'une enceinte 80, de forme sensiblement parallélépipédique, qui est partagée par un grillage résistif 92, fixé sur les parois de l'enceinte 80, en deux chambres internes, à savoir une chambre amont 82 et une chambre aval 84. La chambre amont 82 comporte un tuyau 88 d'alimentation en eau à déminéraliser et la chambre aval 84 comporte un tuyau d'évacuation 90 de l'eau déminéralisée, dont la hauteur par rapport au fond de l'enceinte 80 détermine le volume d'eau déminéralisé contenu dans l'appareil. Un corps microporeux fibreux 86 constitué d'un bloc de silice allégée, constitué de fibres de silice de diamètre d'environ 9 micromètres, est appliqué par l'une de ses faces principales contre la face amont du grillage résistif 92, et est fixé par sa face inférieure et ses faces transversales sur les parois de l'enceinte 80 de façon que l'eau admise dans la chambre amont 82 ne puisse s'écouler dans la chambre aval 84 qu'en traversant le corps microporeux fibreux 86.

Le grillage résistif 92 est alimenté en courant electrique par deux fils 94,94' de façon à pouvoir porter le corps microporeux fibreux à la température requise supérieure à 60°C et préférentiellement de l'ordre de 80°C. De préférence le corps microporeux fibreux 86 occupera la plus grande partie de la hauteur de l'enceinte 80. L'eau à déminéraliser est admise par la canalisation 88 dans la chambre amont 82, à partir de laquelle elle traverse le corps microporeux fibreux 86 pour s'écouler, au travers du grillage résistif 92 dans la chambre aval 84. Lorsque le niveau de l'eau déminéralisée dans cette chambre atteint celui de la canalisation de sortie 90, l'eau déminéralisée s'écoule par cette dernière. Bien entendu le grillage résistif 92 pourrait également être disposé au sein du corps poreux.

Comme mentionné précédemment, une telle réalisation est intéressante par la simplicité avec laquelle elle permet de réaliser un déminéralisateur d'eau efficace. On remarquera cependant que compte tenu de l'importance du mouillage du corps microporeux fibreux 86, la qualité de la déminéralisation fournie n'est pas alors optimale.

## Revendications

1. Dispositif de déminéralisation de l'eau du type comportant un matériau poreux traversé par l'eau à déminéraliser, caractérisé en ce que le matériau poreux est constitué d'un corps microporeux fibreux (3,43,64,86), dont les espaces interfibres sont en communication les uns avec les autres, la porosité du corps microporeux fibreux (3,43,64,86), c'est-à-dire le rapport du volume occupé par les pores accessible par les molécules d'eau, sur le volume total du corps poreux, étant au moins égale à 50%, ce dispositif, comprenant :
- des moyens d'alimentation (13,53,73,88) en eau à déminéraliser d'une face amont (S) du corps microporeux fibreux (3,43,64,86) pour faire percoler l'eau à déminéraliser exclusivement à travers le corps microporeux fibreux (3,43,64,86) de la face amont (S) de celui-ci vers une face aval (S'),
- des moyens de chauffage (27,27'63,77,92) du corps microporeux fibreux (3,43,64,86) aptes à maintenir celui-ci, au moins pendant la durée de la percolation, à une température d'au moins 60°C, de manière à provoquer une montée rapide en température de l'eau à déminéraliser venant en contact avec le corps microporeux fibreux (3,43,64,86) pendant la percolation,
- des moyens (21,61,74,90) aptes à recueillir l'eau déminéralisée après sa percolation.

2. Dispositif suivant la revendication 1, caractérisé en ce que le corps microporeux fibreux (3,43,64) a une forme telle que la distance séparant sa face amont (S) de sa face aval (S') est faible en comparaison de ses autres dimensions.

3. Dispositif suivant l'une des revendications 1 ou 2, caractérisé en ce que les moyens de chauffage sont constitués d'une ou plusieurs résistances électriques (27,27') en contact avec le corps microporeux fibreux (3,43).

4. Dispositif suivant la revendication 3 caractérisé en ce que les moyens de chauffage sont constitués d'un grillage résistif (92) parcouru par un courant électrique, en contact avec le corps microporeux fibreux (86).

5. Dispositif suivant la revendication 4 caractérisé en ce que le grillage résistif (92) est disposé au sein du corps microporeux fibreux.

6. Dispositif suivant l'une des revendications 1 à 3, caractérisé en ce que les moyens de chauffage sont constitués de deux électrodes conductrices alimentées en courant électrique, qui sont disposées en contact avec des faces opposées du corps microporeux fibreux.

7. Dispositif suivant l'une des revendications 1 ou 2 caractérisé en ce que les moyens de chauffage du corps microporeux fibreux (43) sont constitués d'un générateur de vapeur d'eau (63).

8. Dispositif suivant la revendication 7, caractérisé en ce que le générateur de vapeur d'eau (63) est apte à créer un flux de vapeur dans lequel le corps microporeux fibreux (43) est totalement immergé.

9. Dispositif suivant la revendication 7 caractérisé en ce qu'il comporte des moyens aptes à injecter la vapeur d'eau au travers du corps microporeux fibreux, à contre-courant du sens de percolation de l'eau au sein de celui-ci.

10. Dispositif suivant l'une des revendications 1 ou 2 caractérisé en ce que les moyens de chauffage sont constitués d'un générateur de micro-ondes, tel qu'un magnétron.

11. Dispositif suivant l'une des revendications précédentes caractérisé en ce que la face amont (S) du corps microporeux fibreux (64) est située sous les moyens d'alimentation en eau à déminéraliser (73) et est inclinée par rapport à l'horizontale, de façon qu'au moins une partie de l'eau d'alimentation s'écoule sur ladite surface amont (S), de façon à imprégner la totalité de celle-ci.

12. Dispositif suivant l'une des revendications 1 à 10 caractérisé en ce que la face amont (S) du corps microporeux fibreux (86) est une de ses faces latérales verticales, de façon que la percolation de l'eau s'effectue horizontalement sous l'effet d'une différence de hauteur d'eau entre la face amont (S) et la face aval (S') du corps microporeux fibreux (86).

13. Dispositif suivant l'une des revendications précédentes, caractérisé en ce que le corps microporeux fibreux (3,43,64,86) est à base de silicate de calcium et/ou de silicate d'alumine.

14. Dispositif suivant l'une quelconque des revendications précédentes caractérisé en ce que les moyens de chauffage sont tels qu'ils portent la température du corps microporeux fibreux (3,43,64,86) à une température supérieure, d'au moins 60°C, à celle de l'eau à déminéraliser.

## Claims

1. Device for demineralizing water, of the type comprising a porous material traversed by the water to be demineralized, characterized in that the porous material is constituted by a fibrous microporous body (3, 43, 64, 86), of which the spaces between fibers are in communication with one another, the porosity of the fibrous microporous body (3, 43, 64, 86), i.e. the ratio of the volume occupied by the pores accessible by the molecules of water, with respect to the total volume of the porous body, being at least equal to 50%, this device comprising:
- means (13, 53, 73, 88) for supplying with water to be demineralized an upstream face (S) of the fibrous microporous body (3, 43, 64, 86) to cause the water to be demineralized to percolate exclusively through the fibrous microporous body (3, 43, 64, 86) from the upstream face (S) thereof towards a downstream face (S'),
- means (27, 27', 63, 77, 92) for heating the fibrous microporous body (3, 43, 64, 86) adapted to maintain the latter, at least for the duration of percolation, at a temperature of at least 60°C, so as to provoke a rapid rise in temperature of the water to be demineralized coming into contact with the fibrous microporous body (3, 43, 64, 86) during percolation,
- means (21, 61, 74, 90) adapted to collect the demineralized water after percolation thereof.

2. Device according to Claim 1, characterized in that the fibrous microporous body (3, 43, 64) has such a shape that the distance separating its upstream face (S) from its downstream face (S') is small compared with its other dimensions.

3. Device according to one of Claims 1 or 2, characterized in that the heating means are constituted by one or more electrical resistors (27, 27') in contact with the fibrous microporous body (3, 43).

4. Device according to Claim 3, characterized in that the heating means are constituted by a resistive grating (92) having an electric current passing therethrough, in contact with the fibrous microporous body (86).

5. Device according to Claim 4, characterized in that the resistive grating (92) is disposed within the fibrous microporous body.

6. Device according to one of Claims 1 to 3, characterized in that the heating means are constituted by two conductive electrodes supplied with electric current, which are disposed in contact with opposite faces of the fibrous microporous body.

7. Device according to one of Claims 1 or 2, characterized in that the means for heating the fibrous microporous body (43) are constituted by a steam generator (63).

8. Device according to Claim 7, characterized in that the steam generator (63) is adapted to create a vapour flow in which the fibrous microporous body (43) is totally immersed.

9. Device according to Claim 7, characterized in that it comprises means adapted to inject the steam through the fibrous microporous body, in counterflow with respect to the direction of percolation of the water within the latter.

10. Device according to one of Claims 1 or 2, characterized in that the heating means are constituted by a microwave generator, such as a magnetron.

11. Device according to one of the preceding Claims, characterized in that the upstream face (S) of the fibrous microporous body (64) is located beneath the means (73) for supplying water to be demineralized and is inclined with respect to the horizontal, so that at least a part of the supply water flows over said upstream surface (S) so as to impregnate all the latter.

12. Device according to one of Claims 1 to 10, characterized in that the upstream face (S) of the fibrous microporous body (86) is one of its vertical lateral faces, so that percolation of the water is effected horizontally under the effect of a difference in height of water between the upstream face (S) and the downstream face (S') of the fibrous microporous body (86).

13. Device according to one of the preceding Claims, characterized in that the fibrous microporous body (3, 43, 64, 86) is based on calcium silicate and/or alumo-silicate.

14. Device according to any one of the preceding Claims, characterized in that the heating means are such that they take the temperature of the fibrous microporous body (3, 43, 64, 86) to a temperature higher, by at least 60°C, than that of the water to be demineralized.

## Patentansprüche

1. Wasserentmineralisierungsvorrichtung des Typs, der ein poröses, vom zu entmineralisierenden Wasser durchströmtes Material aufweist,
**dadurch gekennzeichnet, daß**
das poröse Material aus einem faserartigen, mikroporösen Körper (3, 43, 64, 86) besteht, bei dem die Räume zwischen den Fasern miteinander in Verbindung stehen, wobei die Porösität des faserartigen, mikroporösen Körpers (3, 43, 64, 86), d.h. das Verhältnis des von den Poren eingenommenen, den Wassermolekülen zugänglichen Volumens zum Gesamtvolumen des porösen Körpers, mindestens 50% beträgt, wobei die Vorrichtung aufweist:
- Mittel zum Zuführen (13, 53, 73, 88) des zu entmineralisierenden Wassers auf die Einströmseite (S) des faserartigen, mikroporösen Körpers (3, 13, 61, 86), um das zu entmineralisierende Wasser ausschließlich durch den faserartigen, mikroporösen Körper (3, 43, 64, 86), von dessen Einströmseite (S) zu dessen Abströmseite (S') hin, zu perkolieren,
- Einrichtung zum Aufheizen (27, 27', 63, 77, 92) des faserartigen, mikroporösen Körpers (3, 43, 64, 86), die diesen zumindest während der Dauer der Perkolierung auf einer Temperatur von mindestens 60°C halten können, derart daß ein schneller Temperaturanstieg des zu entmineralisierenden Wassers, das während der Perkolierung mit dem faserartigen, mikroporösen Körper (3, 43, 64, 86) in Kontakt kommt, hervorgerufen wird.
- Mittel (21, 61, 74, 90), die das entmineralisierte Wasser nach seiner Perkolierung sammeln können.

2. Vorrichtung nach Anspruch 1, dadurch gekennzeichnet, daß der faserartige, mikroporöse Körper (3, 43, 64) eine solche Form besitzt, daß der Abstand, der seine Einströmseite (S) von seiner Abströmseite (S') trennt, im Vergleich zu seinen anderen Abmessungen gering ist.

3. Vorrichtung nach einem der Ansprüche 1 oder 2, dadurch gekennzeichnet, daß die Heizeinrichtungen aus einer oder mehreren elektrischen Widerständen (27, 27') bestehen, die sich in Kontakt mit dem faserartigen, mikroporösen Körper (3, 43) befinden.

4. Vorrichtung nach Anspruch 3, dadurch gekennzeichnet, daß die Heizeinrichtungen aus einem resistiven Drahtgeflecht (92) bestehen, durch das ein elektrischer Strom fließt und das in Kontakt mit dem faserartigen, mikroporösen Körper (86) ist.

5. Vorrichtung nach Anspruch 4, dadurch gekennzeichnet, daß das resistive Drahtgeflecht (92) im Inneren des faserartigen, mikroporösen Körpers angeordnet ist.

6. Vorrichtung nach einem der Ansprüche 1 bis 3, dadurch gekennzeichnet, daß die Heizeinrichtungen aus zwei mit Strom versorgten Leiterelektroden bestehen, die in Kontakt mit den gegenüberliegenden Seiten des faserartigen, mikroporösen Körpers angeordnet sind.

7. Vorrichtung nach einem der Ansprüche 1 oder 2, dadurch gekennzeichnet, daß die Heizeinrichtungen des faserartigen, mikroporösen Körpers (43) aus einem Wasserdampferzeuger (63) bestehen.

8. Vorrichtung nach Anspruch 7, dadurch gekennzeichnet, daß der Wasserdampferzeuger (63) einen Dampffluß hervorbringen kann, in welchem der faserartige, mikroporöse Körper (43) vollständig eingetaucht wird.

9. Vorrichtung nach Anspruch 7, dadurch gekennzeichnet, daß sie Mittel aufweist, die den Wasserdampf durch den faserartigen, mikroporösen Körper hindurchpressen können, und zwar entgegengesetzt der Richtung der Perkolierung des Wassers in dessen Innerem.

10. Vorrichtung nach einem der Ansprüche 1 oder 2, dadurch gekennzeichnet, daß die Heizeinrichtungen aus einem Mikrowellenerzeuger, wie beispielsweise einem Magnetron, bestehen.

11. Vorrichtung nach einem der vorstehenden Ansprüche, dadurch gekennzeichnet, daß die Einströmseite (S) des faserartigen, mikroporösen Körpers (64) sich unterhalb der Zuführmittel des zu entmineralisierenden Wassers (73) befindet und bezüglich der Horizontalen so geneigt ist, daß zumindest ein Teil des Zufuhrwassers auf die Einströmseite (S) fließt, so daß diese vollständig durchfeuchtet wird.

12. Vorrichtung nach einem der Ansprüche 1 bis 10, dadurch gekennzeichnet, daß die Einströmseite (S) des faserartigen, mikroporösen Körpers (86) eine seiner vertikalem Seitenflächen ist, so daß das Perkolieren des Wassers horizontal unter der Wirkung der Höhendifferenz zwischen der Einströmseite (S) und der Abströmseite (S') des faserartigen, mikroporösen Körpers (86) erfolgt.

13. Vorrichtung nach einem der vorstehenden Ansprüche, dadurch gekennzeichnet, daß der faserartigen, mikroporöse Körper (3, 43, 64, 86) auf Basis von Calciumsilikat und/oder Tonerdesilicat hergestellt ist.

14. Vorrichtung nach einem der vorstehenden Ansprüche, dadurch gekennzeichnet, daß die Heizeinrichtungen derart beschaffen sind, daß die Temperatur des faserartigen, mikroporösen Körpers (3, 43, 64, 86) soweit erhöht wird, daß sie mindestens 60°C über der Temperatur des zu entmineralisierenden Wassers liegt.
